# FASCICULE DE BREVET EUROPEEN

(11) **EP 2 302 518 B1**
(45) Date de publication et mention de la délivrance du brevet: **20.12.2017**
(21) Numéro de dépôt: 10176449.6
(22) Date de dépôt: 13.09.2010
(51) Int. Cl.: G06F 9/445, G06F 12/06, G06F 12/14, G06F 21/00, G06Q 20/00, G06F 21/35, G06Q 20/34, G06Q 20/40, G07F 7/12

(54) **Procédé et dispositif d'installation d'une application MIFARE dans une mémoire MIFARE**
Verfahren und Vorrichtung zur Einrichtung einer MIFARE Anwendung in einem MIFARE Speicher
Method and apparatus for installation of a MIFARE applicaton in a MIFARE memory

(30) Priorité: 14.09.2009 FR 0956297
(43) Date de publication de la demande: 30.03.2011
(73) Titulaire: Oberthur Technologies, 92700 Colombes (FR)
(72) Inventeur: Dialo, Sophie, 94200, Ivry sur Seine (FR)
(74) Mandataire: Delumeau, François Guy

(56) Documents cités:
- EP-A1- 1 248 188
- WO-A1-2009/016541
- WO-A1-2009/031065
- WO-A1-2009/144612
- WO-A2-2009/013700
- ANONYMOUS: "MIFARE STANDARD CARD IC MF1 IC S50 FUNCTIONAL SPECIFICATION" PHILIPS SEMICONDUCTORS. PRODUCT SPECIFICATION,, [Online] no. REVISION 4.0, 1 juillet 1998 (1998-07-01), pages 1-18, XP002537152 Extrait de l'Internet: URL:http://www.synometrix.com/MF1_%20S501_ Data_Sheet.pdf> [extrait le 2009-07-15]

## Description

### Arrière-plan de l'invention

La présente invention se situe dans le domaine des cartes à microcircuits (cartes à puce).

Elle s'applique en particulier, et de façon non limitative, aux cartes à microcircuits aptes à communiquer avec un lecteur de ladite carte, pour la mise en oeuvre d'une ou plusieurs applications (transaction de paiement, contrôle d'accès, fidélisation...).

Elle s'intéresse plus particulièrement aux cartes à microcircuit aptes à mettre en oeuvre une ou plusieurs applications MIFARE (marque déposée) conformes au standard ISO14443A.

Le document WO 2009/031065 décrit un mécanisme permettant à un agent logiciel de remplacer une application MIFARE installée dans une mémoire MIFARE, par une autre application MIFARE, cette autre application MIFARE étant temporairement mémorisée dans une mémoire dite de « swap ».

Pour effectuer cette substitution, ce document enseigne simplement de recopier la deuxième application MIFARE dans la mémoire MIFARE.

Un tel mécanisme ne permet malheureusement pas de substituer, en utilisant les mécanismes classiques du protocole MIFARE, une application par une autre dans une mémoire MIFARE, dès lors que ces applications viennent de fournisseurs différents.

L'invention propose un mécanisme d'installation d'une application MIFARE qui ne présente pas cet inconvénient.

### Objet et résumé de l'invention

L'invention vise plus précisément un procédé et un dispositif d'installation d'une application MIFARE, un programme d'ordinateur et un support d'enregistrement conformes aux revendications.

L'invention concerne aussi un dispositif portable, par exemple un téléphone portable, une carte SIM ou plus généralement une carte à microcircuit, ce dispositif portable comportant un dispositif d'installation tel que mentionnés ci-dessus et la zone sécurisée dans laquelle ce dispositif d'installation obtient les clés et données d'accès courantes. Préférentiellement, le dispositif portable selon l'invention comporte en outre l'application de gestion de la mémoire MIFARE.

Il est important de noter que l'application de gestion de la mémoire MIFARE, passage obligé pour accéder à la mémoire MIFARE, n'est en aucune façon modifiée pour la mise en oeuvre de l'invention.

L'invention résout effectivement les inconvénients du mécanisme de l'art antérieur, en ce qu'elle permet de substituer, dans une mémoire MIFARE, une première application MIFARE par une deuxième application MIFARE, même si celles-ci viennent de fournisseurs différents.

En effet, lorsqu'une application MIFARE courante est installée dans la mémoire MIFARE, le dispositif d'installation selon l'invention peut obtenir les clés et données d'accès de cette application courante à partir de la zone sécurisée, et les présenter à l'application classique de gestion de la mémoire MIFARE pour que celle-ci copie dans la mémoire MIFARE les clés et données d'accès de l'application à installer.

Dans un mode particulier de réalisation, la zone sécurisée ne peut être lue que par le dispositif d'installation selon l'invention et par l'application courante.

On notera que le mécanisme présenté dans le document WO 2009/031065 de l'art antérieur est totalement muet sur ce point, et impose donc implicitement que les clés et données d'accès de l'application courante et de l'application à installer soient identiques ou partagées. En pratique, cette contrainte est inenvisageable dès lors que l'on souhaite installer des applications MIFARE venant de fournisseurs différents.

Dans un mode de réalisation particulier, au moins certaines applications MIFARE pouvant être installées dans le mémoire MIFARE sont mémorisées dans un domaine de sécurité (en anglais « Security Domain ») tel que défini par la norme Globalplatform Card Spécification v2.2, l'obtention des clés et données d'accès courantes se faisant à partir d'une zone sécurisée de ce domaine de sécurité.

D'une façon générale, un domaine de sécurité est une application mémorisée dans la mémoire de la puce d'une carte à puce, établie au nom d'une entité externe à la carte, par exemple un fournisseur d'application ou une autorité de contrôle.

Un domaine de sécurité offre des services de sécurité tels que la gestion de clés, le chiffrement, le déchiffrement et la génération et vérification de signatures aux applications présentent sur la carte ainsi qu'aux entités externes. Plus précisément, et selon la norme précitée, un domaine de sécurité comporte un ensemble de clés (en anglais « key-set »), ces clefs ne pouvant être accédées que par le domaine de sécurité, ce mécanisme permettant à plusieurs fournisseurs indépendants de prévoir des services tout en assurant qu'un fournisseur ne puisse pas accéder aux clefs cryptographiques d'un autre.

Dans ce mode particulier de réalisation, l'invention propose ainsi d'utiliser le key-set du domaine de sécurité d'une application MIFARE pour mémoriser les clés et données d'accès propres à cette application MIFARE, le procédé et le dispositif d'installation selon l'invention étant aptes à lire ce key-set, lorsque cette application MIFARE est couramment installée dans le mémoire MIFARE, pour la substituer par une autre.

Cette caractéristique permet de sauvegarder une image fidèle de l'application MIFARE courante avant substitution.

L'invention peut aussi être utilisée pour installer une première application MIFARE dans une mémoire MIFARE de façon sécurisée. En effet, dans un mode de réalisation particulier de l'invention, la mémoire MIFARE est protégée par des clés définies lors d'une étape de personnalisation de la mémoire MIFARE, dites clés d'initialisation, ces clés étant mémorisées dans une zone sécurisée et utilisées pour installer la première application MIFARE dans la carte. Dans un mode particulier de réalisation, cette zone sécurisée ne peut être lue que par le dispositif d'installation selon l'invention.

On notera que ce mode de réalisation renforce considérablement la sécurité des cartes MIFARE, celles-ci étant traditionnellement livrées sans protection, par exemple initialisées avec des valeurs de type « FF ».

Dans un mode particulier de réalisation, les différentes étapes du procédé d'installation sont déterminées par des instructions de programmes d'ordinateurs.

En conséquence, l'invention vise aussi un programme d'ordinateur sur un support d'informations, ce programme étant susceptible d'être mis en oeuvre dans un terminal portable, par exemple un téléphone, ou plus généralement dans un ordinateur, ce programme comportant des instructions adaptées à la mise en oeuvre des étapes du procédé d'installation tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d' un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une mémoire MIFARE ;
- la figure 2 représente un téléphone portable comportant, dans une carte à microcircuit, un dispositif d'installation conforme à un mode particulier de réalisation de l'invention ; et
- la figure 3 représente, sous forme d'organigramme, les principales étapes d'un procédé d'installation conforme à un mode particulier de réalisation de l'invention.

### Description détaillée d'un mode de réalisation

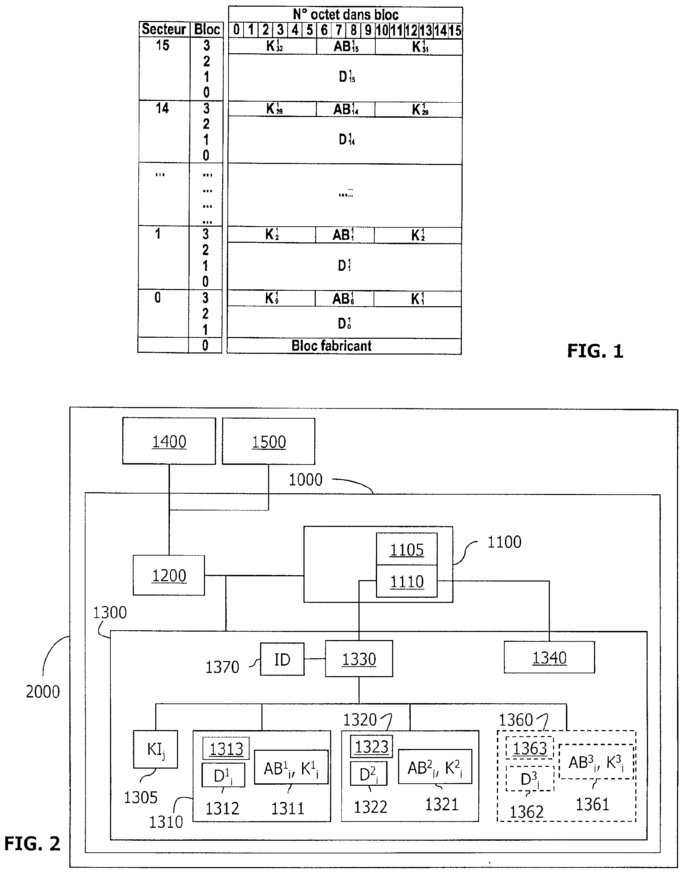

La **figure 1** représente une mémoire MIFARE 1340 organisée en seize secteurs de quatre blocs chacun, le premier bloc (bloc 0) du premier secteur (secteur 0) étant un bloc spécial réservé au fabricant et comportant le numéro de série de la mémoire.

Chaque secteur 1 à 15 comporte trois blocs de données 0 à 2, le premier secteur 0 comportant deux blocs de données 1 et 2.

Dans la suite de la description, on notera globalement D¹ᵢ les données du secteur i.

Conformément au protocole MIFARE, l'accès aux données D¹ᵢ d'un secteur i est protégé par deux clefs et les conditions de ces accès sont définies par des données d'accès (en anglais Access Bits, « AB »), les clefs et les données d'accès étant mémorisées dans le bloc 3 de ce secteur.

A titre d'exemple, l'accès en écriture ou en lecture aux données D¹₁₅ des données du secteur 15 est protégé par les clefs K¹₃₂ et K¹₃₁ et défini par les données d'accès AB¹_{15.}

Dans la suite de la description, les données Dⁱⱼ seront appelées « données d'application » pour les distinguer sans ambigüité des données d'accès ABⁱⱼ.

La **figure 2** représente de façon schématique des éléments de l'architecture matérielle d'un téléphone portable 2000.

Ce téléphone portable comporte notamment une antenne 1400 et un module d'interface homme-machine 1500, l'antenne et le module d'interface homme-machine étant reliés au processeur 1200 d'une carte SIM 1000.

La carte SIM 1000 est une carte à microcircuit conforme à un mode de réalisation de l'invention. Elle comporte une mémoire 1300 non volatile réinscriptible par exemple de type EEPROM dans laquelle se trouve la mémoire MIFARE 1340.

La carte SIM 1000 comporte une mémoire morte 1100 de type ROM dans laquelle est mémorisée une application 1110 apte à mettre en oeuvre le protocole MIFARE pour accéder à la mémoire MIFARE 1340.

Cette application 1110 est un point de passage obligé pour accéder à la mémoire MIFARE 1340.

Plus précisément, lorsqu'une entité souhaite accéder en lecture ou en écriture aux données d'application D¹ᵢ du secteur i de la mémoire MIFARE 1340, cette entité doit envoyer une commande à l'application 1110, cette commande étant accompagnée d'un mot de passe calculé à partir des clefs et K¹₂ᵢ₊₁ et des données d'accès AB¹ᵢ afin de permettre à l'application 1110 d'authentifier l'entité en question à partir des clefs K¹₂ᵢ et K¹₂ᵢ₊₁ et des données d'accès AB¹ᵢ mémorisées dans la mémoire MIFARE 1340, par exemple selon un mécanisme de défi/réponse.

Il est important de noter que l'application 1110 de gestion de la mémoire MIFARE est vue comme une « boite noire », et qu'elle n'est en aucune façon modifiée pour la mise en oeuvre de l'invention.

Dans l'exemple de réalisation décrit ici, la carte SIM 1000 comporte, dans la mémoire EEPROM 1300, deux zones mémoires 1310, 1320 chacune étant associée à une application MIFARE pouvant être installée dans la mémoire MIFARE 1340.

Conformément à l'invention, chacune de ces zones mémoires 1310, 1320 comporte :
- une zone sécurisée 1311, 1321 dans laquelle sont mémorisées les clefs K et les données d'accès AB pour cette application MIFARE ; et
- une zone 1312, 1322 sécurisée ou non, dans laquelle sont mémorisées les données d'application de cette application MIFARE.

Autrement dit, pour installer une application MIFARE à partir d'une zone mémoire 1310 par exemple, il convient :
- de recopier les clefs Kⁱⱼ et les données d'accès ABⁱⱼ à partir de la zone sécurisée 1311 dans les blocs 3 des secteurs de la mémoire MIFARE 1340 ; et
- de recopier les données d'application Dⁱⱼ de la zone 1312 sécurisée ou non dans les blocs 0 à 2 de la mémoire MIFARE 1340.

Dans le mode de réalisation décrit ici, les zones mémoire 1310, 1320 sont des domaines de sécurité (en anglais « Security Domains ») tels que définis par la norme Globalplatform Card Specification v2.2.

Dans le mode de réalisation décrit ici, les zones sécurisées 1311, 1321 constituent une sous-partie de l'ensemble de clés (key-set) des domaines de sécurité 1310, 1320.

Dans le mode de réalisation décrit ici, la carte SIM 1000 comporte, dans la mémoire morte 1100, une application 1105 apte installer un nouveau domaine de sécurité 1360 (du type de 1310 et 1320) dans la mémoire EEPROM 1300.

Conformément à la norme Globalplatform Card Specification v2.2, cette application 1105 est apte à :
- instancier une zone sécurisée 1361 pour recevoir le key-set de l'application ;
- vérifier que la mémoire EEPROM 1300 comporte suffisamment de place pour accueillir la zone sécurisée ou non 1362, et si c'est le cas, pour la réserver ;
- recevoir et recopier le key-set de l'application dans la zone sécurisée 1361 ; et
- recevoir et recopier les données de cette application dans la zone sécurisée ou non 1362.

Dans le mode particulier de réalisation de l'invention décrit ici, la mémoire MIFARE 1340 est, lors d'une phase de personnalisation de la carte SIM 1000, protégée par des clefs d'initialisation KIⱼ, ces clefs étant mémorisées dans une zone sécurisée 1305 et dans les blocs 3 des secteurs de la mémoire MIFARE. Ainsi, pour pouvoir installer une première application dans la mémoire MIFARE 1340, il est nécessaire, conformément au protocole MIFARE d'envoyer une commande à l'application 1110, accompagnée d'un mot de passe calculé à partir de ces clés d'initialisation. Ceci protège la mémoire MIFARE contre l'installation d'une première application non souhaitée.

Dans le mode de réalisation décrit ici, l'interface homme-machine 1500 offre à l'utilisateur du téléphone portable 2000, des moyens, par exemple sous forme d'un menu, pour installer une application MIFARE à partir d'une zone mémoire 1310, 1320, 1360 dans la mémoire 1340.

Dans le mode de réalisation décrit ici, cette commande d'installation est reçue et traitée par un pilote logiciel 1313, 1323, 1363 développé par l'entité ayant établie l'application MIFARE.

Ces pilotes 1313, 1323, 1363 sont aptes à communiquer avec l'application 1110 de gestion de la mémoire MIFARE, seule application habilitée à accéder en lecture/écriture au contenu de la mémoire MIFARE 1340.

Comme il a été dit précédemment, dans le mode de réalisation décrit ici, la mémoire MIFARE 1340 est à l'origine protégée par les clefs d'initialisation KIⱼ mémorisées dans la zone sécurisée 1305.

Par conséquent, l'installation d'une première application 1310, 1320, 1360 dans la mémoire MIFARE 1340, nécessite, conformément au protocole MIFARE, la présentation des clefs d'initialisation KIⱼ à l'application 1110 de la gestion de la mémoire MIFARE.

De la même façon, le remplacement d'une première application 1310 par une deuxième application 1320 dans la mémoire MIFARE 1340, nécessite la présentation des clefs K¹ᵢ et des données d'accès AB¹ⱼ de la première application 1310 à l'application 1110 de la gestion de la mémoire MIFARE.

A cet effet, la carte SIM 1000 comporte un dispositif d'installation 1330 conforme à l'invention apte à :
- accéder aux zones sécurisées 1305, 1311, 1321, 1361;
- identifier l'application MIFARE couramment installée dans la mémoire MIFARE 1340 ;
- recevoir une commande du pilote de l'application que l'utilisateur souhaite installer dans la mémoire MIFARE 1340 ;
- récupérer les clefs K^{j}ᵢ et les données d'accès AB^{j}ᵢ de l'application MIFARE couramment installée dans la mémoire MIFARE 1340, ou avant la première installation, les clés d'initialisation KIⱼ, ces clefs et données d'accès étant dites « clefs et données d'accès courantes »; et
- récupérer les clefs K^{k}ᵢ et les données d'accès AB^{k}ᵢ de l'application MIFARE à installer dans la mémoire MIFARE 1340, ces clefs et données d'accès étant dites « nouvelles clefs et données d'accès»; et ;
- envoyer une ou plusieurs commandes conformes au protocole MIFARE à l'application 1110 de gestion de la mémoire MIFARE 1340 pour lui demander de copier les nouvelles clefs et données d'accès dans la mémoire MIAFRE 1340 en lui présentant les clefs et données d'accès courantes nécessaires à cette écriture.

Chacune des zones 1305, 1311, 1321, 1361 est sécurisée, ce qui signifie, dans ce mode de réalisation que :
- la zone 1305 ne peut être lue que par le dispositif d'installation 1330 ;
- la zone 1311 ne peut être lue que par le dispositif d'installation 1330 et par le pilote 1313 ;
- la zone 1321 ne peut être lue que par le dispositif d'installation 1330 et par le pilote 1323 ;
- la zone 1361 ne peut être lue que par le dispositif d'installation 1330 et par le pilote 1363.

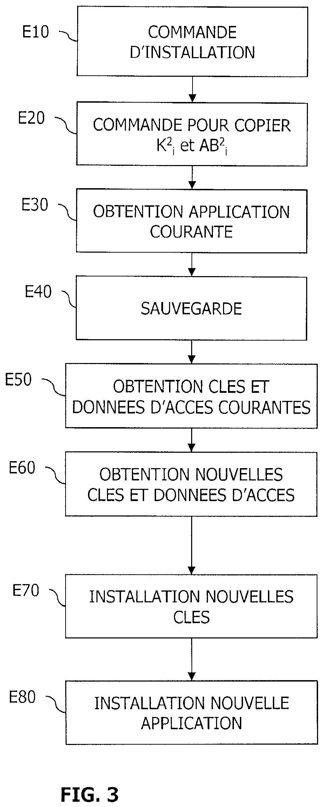

Dans le mode de réalisation décrit ici, le dispositif d'installation 1330 est un module apte à mettre en oeuvre le programme d'ordinateur conforme à l'invention pour mettre en oeuvre le procédé d'installation dont les principales étapes seront décrites ultérieurement en référence à la figure 3.

Dans le mode de réalisation décrit ici, le dispositif d'installation 1330 comporte une mémoire non volatile réinscriptible 1370 dans laquelle elle mémorise un identifiant ID de l'application MIFARE couramment installée dans la mémoire MIFARE 1340. Lors de la personnalisation de la carte SIM 1000, cet identifiant ID est initialisé avec une valeur NULL représentative du fait qu'aucune application MIFARE n'est installée dans la mémoire 1340.

Dans le mode de réalisation décrit ici, le pilote de l'installation MIFARE couramment installée (par exemple 1310) dans la mémoire MIFARE 1340 est apte à envoyer une ou plusieurs commandes MIFARE à l'application 1110 de gestion de la mémoire MIFARE 1340 pour lire le contenu de la mémoire MIFARE 1340 et mettre à jour la zone 1312 sécurisée ou non de son domaine de sécurité pour garder une image fidèle de l'application MIFARE courante avant substitution.

En référence à la figure 3, nous allons maintenant décrire un procédé d'installation d'une application MIFARE 1320 dans la mémoire MIFARE 1340.

Nous supposerons que l'application MIFARE 1320 à installer est un domaine de sécurité 1320 de la mémoire EEPROM 1300. Si ce n'est pas le cas, cette application MIFARE peut être installée par l'application 1105 par mise en oeuvre du protocole Globalplatform comme déjà décrit.

Au cours d'une étape E10, l'utilisateur choisit, en utilisant l'interface homme-machine 1500 du téléphone portable 2000 une application MIFARE 1320 à installer dans la mémoire MIFARE 1340.

Cette opération génère l'envoi, par l'interface homme-machine 1500 d'une commande au système d'exploitation du téléphone portable 2000. Cette commande est, dans le mode particulier de réalisation de l'invention décrit ici, une commande SELECT conforme à la norme ISO7816.

Sur réception de cette commande, le système d'exploitation envoie une commande de sélection au pilote 1323 de l'application sélectionnée.

Au cours d'une étape E20, le pilote 1323 demande au dispositif d'installation 1330 de copier les clefs K²ᵢ et les données d'accès AB²ᵢ de l'application MIFARE 1320 dans la mémoire MIFARE 1340.

Pour connaître l'application couramment installée dans la mémoire MIFARE 1340, le dispositif d'installation 1330 lit la mémoire non volatile réinscriptible 1370 (étape E30) et obtient l'identifiant ID. On rappelle que si aucune application n'est couramment installée dans la mémoire MIFARE 1340, l'identifiant ID comporte une valeur prédéterminée NULL.

On suppose que l'application couramment installée est l'application MIFARE 1310.

Dans le mode de réalisation de l'invention décrit ici, lorsque le pilote 1323 reçoit la commande SELECT, le système d'exploitation envoie, au cours d'une étape E40, une commande de désélection au pilote 1313 de l'application MIFARE 1310 actuellement installée dans la mémoire MIFARE 1340.

Sur réception de cette commande, le pilote 1313 sauvegarde, en envoyant une ou plusieurs commandes à l'application 1110 de gestion de la mémoire MIFARE, , les données D¹ᵢ de l'application MIFARE contenues dans les blocs 0 à 2 des secteurs 1 à 15 et 1 et 2 du secteur 0 de la mémoire MIFARE 1340 dans la zone sécurisée ou non 1312.

Le dialogue entre le pilote 1313 et l'application 1110 de gestion de la mémoire MIFARE pour cette sauvegarde est conforme au protocole MIFARE et connu de l'homme du métier.

Au cours d'une étape E50, le dispositif d'installation 1330 lit les clés K¹ᵢ et les données d'accès AB¹ᵢ courantes à partir de la zone sécurisée (key-set) 1311 du domaine de sécurité 1310.

Au cours d'une étape E60, le dispositif d'installation 1330 lit les nouvelles clés K²ᵢ et les nouvelles données d'accès AB²ᵢ à partir de la zone sécurisée (key-set) 1312 du domaine de sécurité 1320 correspondant à l'application MIFARE à installer.

Au cours d'une étape E70, le dispositif d'installation 1330 présente les clés K¹ᵢ et les données d'accès AB¹ᵢ courantes à l'application 1110 de gestion de la mémoire MIFARE pour lui demander de copier les nouvelles clés K²ᵢ et données d'accès AB²ᵢ dans les blocs 3 des secteurs 0 à 15 de la mémoire MIFARE 1340. Le dialogue entre le dispositif d'installation 1330 et l'application 1110 de gestion de la mémoire MIFARE 1340 est conforme au protocole MIFARE.

Au cours d'une étape E80, le pilote 1323 demande à l'application 1110 de gestion de la mémoire MIFARE 1340 de copier les données D²ᵢ de l'application 1320, qui se trouvent dans la zone sécurisée ou non 1322, dans les blocs 0 à 2 des secteurs 1 à 15 et 1 et 2 du secteur 0 de la mémoire MIFARE 1340. A cet effet, le pilote 1323 présente, à l'application 1110 de gestion de la mémoire MIFARE 1340, ses propres clefs K²ᵢ et données d'accès AB²ᵢ.

Dans le mode de réalisation décrit ici, la substitution d'une première application MIFARE par une deuxième application MIFARE se fait directement, c'est-à-dire en utilisant les clés de la première application MIFARE pour écrire celles de la deuxième application MIFARE dans la mémoire 1340.

En variante, on peut utiliser un jeu de clés temporaire, mémorisé dans une zone sécurisée au sens de l'invention. Ainsi, la substitution d'une première application MIFARE par une deuxième application MIFARE se fait en deux temps :
- dans un premier temps, on écrit les clefs temporaires dans la mémoire 1340 en utilisant les clés de la première application MIFARE ; puis,
- dans un deuxième temps, on écrit les clefs de la deuxième application MIFARE en utilisant les clés temporaires.

Dans le mode de réalisation décrit précédemment, l'application 1110 de gestion de la mémoire MIFARE, les zones sécurisées 1305, 1311, 1321, 1361 et le dispositif 1330 d'installation étaient incorporés dans la carte SIM 1000.

En variante, au moins un de ces éléments est dans le téléphone portable 2000, à l'extérieur de la carte SIM.

## Revendications

1. Procédé d'installation d'une application MIFARE dans une mémoire MIFARE (1340), l'application MIFARE étant conforme au standard ISO 14443A et mémorisée dans un domaine de sécurité (1320) tel que défini par la norme Globalplatform Card Specification v2.2, le procédé comportant :
- une étape (E50) d'obtention, à partir d'une zone sécurisée (1305, 1311) d'une clé d'initialisation (Klj) pour l'installation d'une première application (1310) ou d'une clé (K1i) et des données d'accès (AB1i) de la première application (1310) pour le remplacement de la première application (1310) par une deuxième application (1320) dans la mémoire MIFARE (1340) protégeant l'accès à ladite mémoire MIFARE (1340), dites « clés et données d'accès courantes »; et
- une étape d'obtention (E60) d'au moins une nouvelle clé (K2i) et des données d'accès (AB2i) correspondant à l'application MIFARE à installer, dites « nouvelles clés et données d'accès » ;
- une étape (E70) d'envoi selon le protocole MIFARE desdites clés et données d'accès courantes à une application (1110) de gestion de la mémoire MIFARE (1340), ladite application (1110) étant un point de passage obligé pour accéder à la mémoire MIFARE (1340) et d'envoi d'au moins une instruction déclenchant la copie par ladite application (1110) de gestion desdites nouvelles clés et données d'accès dans ladite mémoire MIFARE (1340) en utilisant lesdites clés et données d'accès courantes ; et
- une étape d'envoi d'une commande à l'application (1110) de gestion de la mémoire MIFARE (1340) déclenchant la copie des données (D2i) de l'application MIFARE à installer dans la mémoire MIFARE (1340) en utilisant lesdites nouvelles clés et données d'accès.

2. Procédé d'installation d'une application MIFARE (1320) selon la revendication 1, **caractérisé en ce que** lesdites clés et données d'accès courantes sont des clés (K1i) et des données d'accès (AB1i) d'une application MIFARE courante (1310) installée dans ladite mémoire MIFARE (1340) pour le remplacement de l'application MIFARE courante (1310) par une deuxième application MIFARE (1320) dans ladite mémoire MIFARE (1340).

3. Procédé d'installation d'une application MIFARE (1320) selon la revendication 2, dans laquelle ladite application MIFARE courante (1310) est mémorisée dans un autre domaine de sécurité (1310), **caractérisé en ce que** ladite étape (E50) d'obtention des clés et données d'accès courantes se fait à partir d'une zone sécurisée (1311) de ce domaine de sécurité.

4. Procédé d'installation d'une application MIFARE (1310) selon la revendication 1, **caractérisé en ce que** lesdites clés et données d'accès courantes sont des clés d'initialisation (Klj) définies lors d'une étape de personnalisation de ladite mémoire (1340).

5. Procédé d'installation d'une application MIFARE (1320) selon l'une quelconque des revendications 1 à 4, **caractérisé en ce que** ladite installation est effectuée sur réception (E10) d'une commande générée consécutivement à l'envoi d'une commande de sélection de ladite application MIFARE (1320) conforme à la commande SELECT de la norme ISO7816.

6. Dispositif (1330) d'installation d'une application MIFARE dans une mémoire MIFARE (1340), l'application MIFARE étant conforme au standard ISO 14443A et mémorisée dans un domaine de sécurité (1320) tel que défini par la norme Globalplatform Card Specification v2.2, le dispositif étant **caractérisé en ce qu'**il comporte :
- des moyens d'obtention d'une clé d'initialisation (Klj) pour l'installation d'une première application (1310) ou d'une clé (K1i) et des données d'accès (AB1i) de la première application (1310) pour le remplacement de la première application (1310) par une deuxième application (1320) dans la mémoire MIFARE (1340) protégeant l'accès à ladite mémoire MIFARE (1340), dites « clés et données d'accès courantes »; et
- des moyens d'obtention selon le protocole MIFARE d'au moins une nouvelle clé (K2i) et des donnée d'accès (AB2i) correspondant à l'application MIFARE à installer, dites « nouvelles clés et données d'accès » ;
- des moyens d'envoi selon le protocole MIFARE desdites clés et données d'accès courantes à une application (1110) de gestion de la mémoire MIFARE (1340), ladite application (1110) étant un point de passage obligé pour accéder à la mémoire MIFARE (1340) et d'envoi d'au moins une instruction déclenchant la copie par ladite application (1110) de gestion desdites nouvelles clés et données d'accès dans ladite mémoire MIFARE (1340), en utilisant lesdites clés et données d'accès courantes ; et
- des moyens d'envoi d'une commande à l'application (1110) de gestion de la mémoire MIFARE (1340) déclenchant la copie des données (D2i) de l'application MIFARE à installer dans la mémoire MIFARE (1340) en utilisant lesdites nouvelles clés et données d'accès.

7. Dispositif portable (1000, 2000) comportant un dispositif d'installation d'une application MIFARE selon la revendication 6 et ladite zone sécurisée (1305, 1311).

8. Dispositif portable (1000, 2000) selon la revendication 7, **caractérisé en ce qu'**il comporte en outre ladite application (1110) de gestion de ladite mémoire MIFARE (1340).

9. Dispositif portable (1000, 2000) selon la revendication 7 ou 8, **caractérisé en ce qu'**il est constitué par un téléphone portable (200) ou une carte à microcircuit (1000).

10. Programme d'ordinateur comportant des instructions pour l'exécution des étapes du procédé d'installation selon l'une quelconque des revendications 1 à 5 lorsque ledit programme est exécuté par un ordinateur.

11. Support d'enregistrement lisible par un ordinateur sur lequel est enregistré un programme d'ordinateur comprenant des instructions pour l'exécution des étapes du procédé d'installation selon l'une quelconque des revendications 1 à 5, lorsque ledit programme est exécuté par un ordinateur.

## Patentansprüche

1. Verfahren zur Installation einer MIFARE-Applikation in einem MIFARE-Speicher (1340), wobei die MIFARE-Applikation gemäß dem Standard ISO 14443A ist und in einem Sicherheitsbereich (1320), wie er durch die Norm Globalplatform Card Specification v2.2 definiert ist, gespeichert ist, wobei das Verfahren umfasst:
- einen Schritt (E50) des Erhaltens - aus einem gesicherten Bereich (1305, 1311)
- eines Initialisierungsschlüssels (KIj) für die Installation einer ersten Applikation (1310) oder eines Schlüssels (K1i) und der Zugangsdaten (AB1i) der ersten Applikation (1310) für das Ersetzen der ersten Applikation (1310) durch eine zweite Applikation (1320) in dem MIFARE-Speicher (1340), die den Zugriff auf den MIFARE-Speicher (1340) schützen, sogenannte "aktuelle Schlüssel und Zugangsdaten", und
- einen Schritt des Erhaltens (E60) wenigstens eines neuen Schlüssels (K2i) und der Zugangsdaten (AB2i), welche der zu installierenden MIFARE-Applikation entsprechen, sogenannte "neue Schlüssel und Zugangsdaten",
- einen Schritt (E70) des Sendens der aktuellen Schlüssel und Zugangsdaten gemäß dem MIFARE-Protokoll an eine Applikation (1110) zum Verwalten des MIFARE-Speichers (1340), wobei die Applikation (1110) ein Zwangspunkt ist, um auf den MIFARE-Speicher (1340) zuzugreifen, und des Sendens wenigstens eines Befehls, der das Kopieren der neuen Schlüssel und Zugangsdaten durch die Verwaltungsapplikation (1110) in den MIFARE-Speicher (1340) unter Verwendung der aktuellen Schlüssel und Zugangsdaten auslöst, und
- einen Schritt des Sendens eines Befehls an die Applikation (1110) zum Verwalten des MIFARE-Speichers (1340), der das Kopieren der Daten (D2i) der zu installierenden MIFARE-Applikation in den MIFARE-Speicher (1340) unter Verwendung der neuen Schlüssel und Zugangsdaten auslöst.

2. Verfahren zur Installation einer MIFARE-Applikation (1320) nach Anspruch 1, **dadurch gekennzeichnet, dass** die aktuellen Schlüssel und Zugangsdaten Schlüssel (K1i) und Zugangsdaten (AB1i) einer aktuellen MIFARE-Applikation (1310), die in dem MIFARE-Speicher (1340) installiert ist, für das Ersetzen der aktuellen MIFARE-Applikation (1310) durch eine zweite MIFARE-Applikation (1320) in dem MIFARE-Speicher (1340) sind.

3. Verfahren zur Installation einer MIFARE-Applikation (1320) nach Anspruch 2, wobei die aktuelle MIFARE-Applikation (1310) in einem anderen Sicherheitsbereich (1310) gespeichert ist, **dadurch gekennzeichnet, dass** der Schritt (E50) des Erhaltens der aktuellen Schlüssel und Zugangsdaten ausgehend von einem gesicherten Bereich (1311) dieses Sicherheitsbereichs erfolgt.

4. Verfahren zur Installation einer MIFARE-Applikation (1310) nach Anspruch 1, **dadurch gekennzeichnet, dass** die aktuellen Schlüssel und Zugangsdaten Initialisierungsschlüssel (Klj) sind, die während eines Schrittes der Personalisierung des Speichers (1340) definiert werden.

5. Verfahren zur Installation einer MIFARE-Applikation (1320) nach einem der Ansprüche 1 bis 4, **dadurch gekennzeichnet, dass** die Installation bei Empfang (E10) eines Befehls durchgeführt wird, der infolge des Sendens eines Befehls zur Auswahl der MIFARE-Applikation (1320) gemäß dem Befehl SELECT der Norm ISO 7816 generiert wird.

6. Vorrichtung (1330) zur Installation einer MIFARE-Applikation in einem MIFARE-Speicher (1340), wobei die MIFARE-Applikation gemäß dem Standard ISO 14443A ist und in einem Sicherheitsbereich (1320), wie er durch die Norm Globalplatform Card Specification v2.2 definiert ist, gespeichert ist, wobei die Vorrichtung **dadurch gekennzeichnet ist, dass** sie umfasst:
- Mittel zum Erhalten eines Initialisierungsschlüssels (KIj) für die Installation einer ersten Applikation (1310) oder eines Schlüssels (K1i) und der Zugangsdaten (AB1i) der ersten Applikation (1310) für das Ersetzen der ersten Applikation (1310) durch eine zweite Applikation (1320) in dem MIFARE-Speicher (1340), die den Zugriff auf den MIFARE-Speicher (1340) schützen, sogenannte "aktuelle Schlüssel und Zugangsdaten", und
- Mittel zum Erhalten, gemäß dem MIFARE-Protokoll, wenigstens eines neuen Schlüssels (K2i) und der Zugangsdaten (AB2i), welche der zu installierenden MIFARE-Applikation entsprechen, sogenannte "neue Schlüssel und Zugangsdaten",
- Mittel zum Senden der aktuellen Schlüssel und Zugangsdaten gemäß dem MIFARE-Protokoll an eine Applikation (1110) zum Verwalten des MIFARE-Speichers (1340), wobei die Applikation (1110) ein Zwangspunkt ist, um auf den MIFARE-Speicher (1340) zuzugreifen, und zum Senden wenigstens eines Befehls, der das Kopieren der neuen Schlüssel und Zugangsdaten durch die Verwaltungsapplikation (1110) in den MIFARE-Speicher (1340) unter Verwendung der aktuellen Schlüssel und Zugangsdaten auslöst, und
- Mittel zum Senden eines Befehls an die Applikation (1110) zum Verwalten des MIFARE-Speichers (1340), der das Kopieren der Daten (D2i) der zu installierenden MIFARE-Applikation in den MIFARE-Speicher (1340) unter Verwendung der neuen Schlüssel und Zugangsdaten auslöst.

7. Tragbare Vorrichtung (1000, 2000), die eine Vorrichtung zur Installation einer MIFARE-Applikation nach Anspruch 6 und den gesicherten Bereich (1305, 1311) umfasst.

8. Tragbare Vorrichtung (1000, 2000) nach Anspruch 7, **dadurch gekennzeichnet, dass** sie ferner die Applikation (1110) zum Verwalten des MIFARE-Speichers (1340) umfasst.

9. Tragbare Vorrichtung (1000, 2000) nach Anspruch 7 oder 8, **dadurch gekennzeichnet, dass** sie von einem Mobiltelefon (200) oder einer Mikrochipkarte (1000) gebildet ist.

10. Computerprogramm, umfassend Befehle für die Durchführung der Schritte des Installationsverfahrens nach einem der Ansprüche 1 bis 5, wenn das Programm durch einen Computer ausgeführt wird.

11. Mittels eines Computers lesbarer Aufzeichnungsträger, auf dem ein Computerprogramm gespeichert ist, welches Befehle für die Durchführung der Schritte des Installationsverfahrens nach einem der Ansprüche 1 bis 5, wenn das Programm durch einen Computer ausgeführt wird, umfasst.

## Claims

1. A method of installing a MIFARE application (1320) in a MIFARE memory (1340), the MIFARE application being according to standard ISO 14443A and stored in a security area (1320) as defined by the Globalplatform Card Specification v2.2 standard, the method including:
- a step (E50) of obtaining, from a secured area (1305, 1311), an initialization key (KIj) for installing a first application (1310) or a key (K1i) and access data (AB1i) of the first application (1310) to replace the first application (1310) with a second application (1320) in the MIFARE memory (1340) protecting the access to said MIFARE memory (1340), called "current keys and access data"; and
- a step (E60) of obtaining at least one new key (K2i) and access data (AB2i) corresponding to the MIFARE application to be installed, called "new keys and access data";
- a step (E70) for sending, according to the MIFARE protocol, said current keys and access data to an application (1110) managing the MIFARE memory (1340), said application (1110) being a mandatory passage point to access the MIFARE memory (1340) and sending at least one instruction initiating copying by said management application (1110) of said new keys and access data in said MIFARE memory (1340) by using said current keys and access data; and
- a step for sending a command to the management application (1110) of the MIFARE memory (1340) triggering the copying of the data (D2i) of the MIFARE application to be installed in the MIFARE memory (1340) by using said new keys and access data.

2. The method of installing a MIFARE application (1320) according to claim 1, **characterized in that** said current keys and access data are keys (K1i) and access data (AB1i) of a current MIFARE application (1310) installed in said MIFARE memory (1340) to replace the current MIFARE application (1310) with a second MIFARE application (1320) in said MIFARE memory (1340).

3. The method for installing a MIFARE application (1320) according to claim 2, wherein said current MIFARE application (1310) is stored in another security area (1310), **characterized in that** said step (E50) for obtaining current keys and access data is carried out from a secured zone (1311) of this security area.

4. The method for installing a MIFARE application (1310) according to claim 1, **characterized in that** said current keys and access data are initialization keys (KIj) defined during a customization step of said memory (1340).

5. The method for installing a MIFARE application (1320) according to any one of claims 1 to 4, **characterized in that** said installation is done upon reception (E10) of a command generated following the sending of a selection command of said MIFARE application (1320) according to the SELECT command of standard ISO 7816.

6. A device (1330) for installing a MIFARE application in a MIFARE memory (1340), the MIFARE application being according to standard ISO 1443A and stored in a security area (1320) as defined by the Globalplatform Card Specification v2.2 standard, the device being **characterized in that** it includes:
- means for obtaining an initialization key (KIj) for installing a first application (1310) or a key (K1i) and access data (AB1i) of the first application (1310) to replace the first application (1310) with a second application (1320) in the MIFARE application (1340) protecting the access to said MIFARE memory (1340), called "current keys and access data"; and
- means for obtaining, according to the MIFARE protocol, at least one new key (K2i) and access data (AB2i) corresponding to the MIFARE application to be installed, called "new keys and access data";
- means for sending, according to the MIFARE protocol, said current keys and access data to a management application (1110) of the MIFARE memory (1340), said application (1110) being a mandatory passage point to access the MIFARE memory (1340) and said at least one instruction initiating the copying by said management application (1110) of said new keys and access data into said MIFARE memory (1340), using said current keys and access data; and
- means for sending a command to the management application (1110) of the MIFARE memory (1440) initiating the copying of data (D2i) of the MIFARE application to be installed in the MIFARE memory (1340) using said new keys and access data.

7. A portable device (1000, 2000) including a device for installing a MIFARE application according to claim 6 and said secured area (1305, 1311).

8. The portable device (1000, 2000) according to claim 7, **characterized in that** it further includes said management application (1110) of said MIFARE memory (1340).

9. The portable device (1000, 2000) according to claim 7 or 8, **characterized in that** it is made up of a mobile telephone (200) or a chip card (1000).

10. A computer program including instructions for carrying out the steps of the installation method according to any one of claims 1 to 5 when said program is executed by a computer.

11. A recording medium readable by a computer on which a computer program is recorded comprising instructions for carrying out steps of the installation method according to any one of claims 1 to 5, when said program is carried out by a computer.
